# FASCICULE DE BREVET EUROPEEN

(11) **EP 3 094 919 B1**
(45) Date de publication et mention de la délivrance du brevet: **28.03.2018**
(21) Numéro de dépôt: 14828192.6
(22) Date de dépôt: 05.12.2014
(51) Int. Cl.: B60Q 1/12, F21S 8/10

(54) **DISPOSITIF D'ECLAIRAGE A LENTILLE MOBILE POUR VEHICULE AUTOMOBILE**
BELEUCHTUNGSVORRICHTUNG MIT BEWEGLICHER LINSE FÜR KRAFTFAHRZEUG
LIGHTING DEVICE WITH MOVEABLE LENS FOR AUTOMOTIVE VEHICLE

(30) Priorité: 17.01.2014 FR 1450376
(43) Date de publication de la demande: 23.11.2016
(73) Titulaire: PSA Automobiles SA, 78300 Poissy (FR)
(72) Inventeur: MOYNIER, Gilles, F-72190 Sarge Les Le Mans (FR); DEGUINES, Bertrand, F-78540 Vernouillet (FR); COPIN, Xavier, F-86360 Chasseneuil du Poitou (FR)
(86) Numéro de dépôt international: PCT/FR2014/053190
(87) Numéro de publication internationale: WO 2015/107273

(56) Documents cités:
- EP-A2- 1 234 716
- WO-A1-2013/131114
- DE-A1-102006 054 937
- DE-A1-102012 103 310
- FR-A1- 2 838 086
- FR-A1- 2 919 547
- FR-A1- 2 923 285
- FR-A1- 2 973 861
- FR-A1- 2 983 279
- US-B2- 7 766 524

## Description

L'invention a trait au domaine de l'éclairage des véhicules automobile. Elle concerne, plus précisément, un dispositif d'éclairage pour un véhicule automobile.

Sur les véhicules modernes tendent à se généraliser des dispositifs permettant d'agrémenter l'éclairage de sorte à en améliorer l'efficacité, la portée, l'esthétique, ou encore pour limiter l'éblouissement des tiers.

En particulier, depuis quelques années, un nombre croissant de véhicules (pour l'instant essentiellement au niveau premium mais la descente en gamme a déjà été amorcée) ont été équipés de feux de circulation diurnes, destinés à accroître la visibilité du véhicule et qui s'éclairent automatiquement à la mise au contact.

De même, des feux directifs ont été proposés, qui permettent par exemple d'éclairer les bas-côtés de la route ou d'adapter la direction principale d'éclairage aux changements de direction du véhicule.

On connaît ainsi un dispositif d'éclairage comprenant :
- un châssis ;
- une optique comprenant une monture et une lentille solidaire de la monture, la lentille ayant un dioptre avant et un dioptre arrière opposés reliés par une tranche, la monture étant montée en rotation par rapport au châssis ;
- un bloc lumineux muni d'une source lumineuse principale ; et
- un mécanisme d'entraînement de l'optique en rotation, propre à placer l'optique selon une orientation dite de route dans laquelle le dioptre avant est tourné vers une direction dite avant.

Un tel dispositif, notamment connu du document FR 2 973 861, permet de procurer un éclairage de route adaptatif selon les conditions de roulage, mais il n'est pas conçu pour procurer un éclairage de signalisation.

De fait les feux conventionnels séparent généralement les fonctions d'éclairage de route et de signalisation, au détriment de la compacité des blocs de phare, au point que pour en affiner l'esthétique les constructeurs proposent aujourd'hui des véhicules ayant des blocs de phares dédiés à l'éclairage de route et des blocs de phares dédiés à l'éclairage de signalisation.

Un premier objectif est de proposer un dispositif d'éclairage capable de procurer tantôt un éclairage de route tantôt un éclairage de signalisation.

Un deuxième objectif est de rendre plus compact les dispositifs d'éclairage des véhicules automobiles.

A cet effet, il est proposé, en premier lieu, un dispositif d'éclairage pour véhicule automobile, qui comprend :
- un châssis ;
- une optique comprenant une monture et une lentille solidaire de la monture, la lentille ayant un dioptre avant et un dioptre arrière opposés reliés par une tranche, la monture étant montée en rotation par rapport au châssis, l'optique étant munie d'une source lumineuse secondaire, apte à éclairer la tranche de la lentille ;
- un bloc lumineux muni d'une source lumineuse principale ;
- un mécanisme d'entraînement de l'optique en rotation, propre à placer l'optique selon une orientation dite de route dans laquelle le dioptre avant est tourné vers une direction dite avant, ce mécanisme d'entraînement étant agencé pour placer l'optique selon une orientation dite de signalisation dans laquelle la tranche est tournée vers l'avant.

Diverses caractéristiques supplémentaires peuvent être prévues, seules ou en combinaison :
- la source lumineuse secondaire est montée dans la lentille.
- la source lumineuse secondaire est montée à distance de la tranche, les dioptres formant un guide d'onde pour canaliser vers la tranche le flux lumineux issu de la source lumineuse secondaire ;
- le bloc lumineux comprend un réflecteur définissant une face interne concave réfléchissante en regard de laquelle la source lumineuse principale est placée ;
- dans l'orientation de route, le dioptre arrière de la lentille est placé en regard de la face interne du bloc lumineux ;
- l'orientation de signalisation est décalée angulairement, par rapport à l'orientation de route, d'un angle de 180° environ ;
- le dispositif comprend une armature montée en rotation par rapport au châssis autour d'un premier axe vertical ;
- l'optique est montée en rotation par rapport à l'armature autour d'un deuxième axe horizontal ;
- l'optique est montée en rotation par rapport au bloc lumineux autour d'un troisième axe horizontal écarté du deuxième axe horizontal ;
- le mécanisme d'entraînement comprend une bielle munie d'un arbre par lequel la bielle est montée en rotation par rapport au châssis autour d'un quatrième axe vertical écarté du premier axe vertical, et d'un levier coudé par rapport à l'arbre, le levier de la bielle étant accouplé au bloc lumineux par une liaison rotule.
- le dispositif comprend en outre une motorisation couplée au mécanisme d'entraînement.

Il est proposé, en deuxième lieu, un bloc de phare pour véhicule automobile, qui intègre un dispositif d'éclairage tel que présenté ci-dessus.

Il est proposé, en troisième lieu, un véhicule automobile équipé d'un tel bloc de phare.

D'autres objets et avantages de l'invention apparaîtront à la lumière de la description d'un mode de réalisation, faite ci-après en référence aux dessins annexés dans lesquels :
- la figure 1 est une vue en perspective montrant un véhicule automobile équipé d'un bloc de phare intégrant un dispositif d'éclairage mobile ;
- la figure 2 est une vue en perspective montrant un dispositif d'éclairage mobile, dans une position de route ;
- la figure 3 est une vue en coupe longitudinale du dispositif d'éclairage de la figure 2, dans la position de route ;
- les figures 4 et 5 sont des vues similaires en perspective illustrant le retournement du dispositif d'éclairage vers une position de signalisation ;
- la figure 6 est une vue en perspective montrant le dispositif d'éclairage de la figure 2 dans sa position de signalisation ;
- la figure 7 est une vue en coupe longitudinale du dispositif d'éclairage de la figure 6, dans sa position de signalisation ;
- les figures 8A, 8B et 8C sont des vues de face illustrant trois positions du dispositif d'éclairage pour permettre un balayage lumineux selon l'orientation du véhicule ;
- les figures 9A, 9B et 9C sont des vues de dessus du dispositif d'éclairage, dans les positions respectives des figures 8A, 8B et 8C ;
- la figure 10 est une vue en perspective illustrant le balayage lumineux, tel que projeté sur une surface plane ;
- la figure 11 est une vue similaire à la figure 6, illustrant un deuxième mode de réalisation ;
- la figure 12 est une vue similaire à la figure 7, illustrant le dispositif d'éclairage dans son deuxième mode de réalisation ;
- la figure 13 est une vue en perspective montrant le dispositif d'éclairage dans son orientation de route, et illustrant un circuit électrique d'alimentation d'une source lumineuse portée par le bloc optique ;
- la figure 14 est une vue en perspective montrant le dispositif d'éclairage de la figure 13 dans son orientation de signalisation ;
- la figure 15 est une vue partielle de côté du dispositif d'éclairage dans son orientation de route, illustrant une variante de réalisation du circuit électrique ;
- la figure 16 est une vue similaire à la figure 15 dans l'orientation de signalisation ;
- la figure 17 est une vue en perspective illustrant un ensemble comprenant plusieurs dispositifs d'éclairage accouplés.

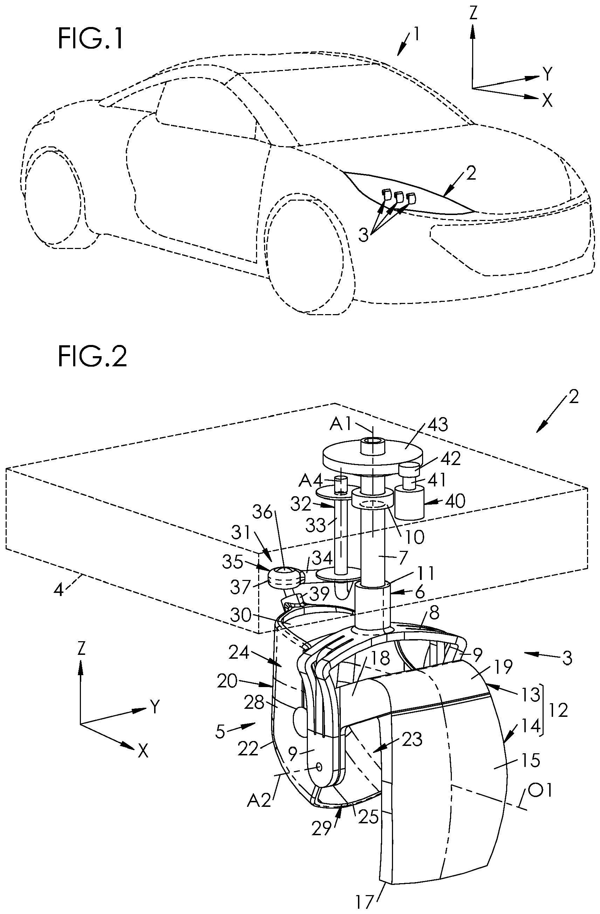

Sur la figure 1 est représenté un véhicule **1** automobile équipé, sur une face avant, d'au moins un bloc **2** de phare intégrant au moins un dispositif **3** d'éclairage mobile.

On définit par rapport au véhicule **1** (et donc par rapport au bloc de phare) un repère orthogonal XYZ comprenant trois axes perpendiculaires deux à deux, à savoir :
- un axe X, définissant une direction longitudinale, horizontale, confondue avec la direction générale de déplacement du véhicule **1**,
- un axe Y, définissant une direction transversale, horizontale, qui avec l'axe X définit un plan XY horizontal,
- un axe Z, définissant une direction verticale, perpendiculaire au plan XY horizontal.

Le dispositif **3** d'éclairage est agencé pour adopter plusieurs configurations ; il comprend, en premier lieu, un châssis **4** qui, lorsque le bloc 2 phare est monté sur le véhicule **1**, est fixe par rapport à celui-ci. La forme du châssis **4** est quelconque. Sur les dessins, on a représenté le châssis **4** sous forme d'une plaque aux fins de clarté et de simplification de l'exposé.

Le dispositif **3** d'éclairage comprend, en deuxième lieu, un équipage **5** mobile par rapport au châssis **4**.

L'équipage **5** mobile comprend une armature **6** montée en rotation par rapport au châssis **4** autour d'un premier axe **A1**. Dans ce qui suit, on décrète par convention, pour la clarté de l'exposé, que ce premier axe **A1** est vertical (suivant Z). Cette orientation correspond d'ailleurs à un mode préféré de réalisation. Cependant, ce premier axe **A1** pourrait être orienté de manière quelconque dans le plan vertical YZ. En particulier, le premier axe **A1** pourrait être horizontal (suivant Y).

Selon un mode de réalisation préféré illustré sur les figures, l'armature **6** se présente sous forme d'un étrier comprenant un arbre **7** principal définissant le premier axe **A1** vertical, une âme **8** sensiblement horizontale solidaire de l'arbre **7** principal et deux bras **9** verticaux qui s'étendent de part et d'autre de l'âme **8**, à partir d'extrémités latérales de celle-ci. Dans l'orientation illustrée, les bras **9** s'ouvrent vers le bas. Néanmoins, cette orientation est arbitraire, et les bras **9** pourraient s'ouvrir à l'inverse vers le haut (en d'autres termes, en maintenant la verticalité de l'axe **A1**, on pourrait retourner l'ensemble de l'équipage **5** mobile).

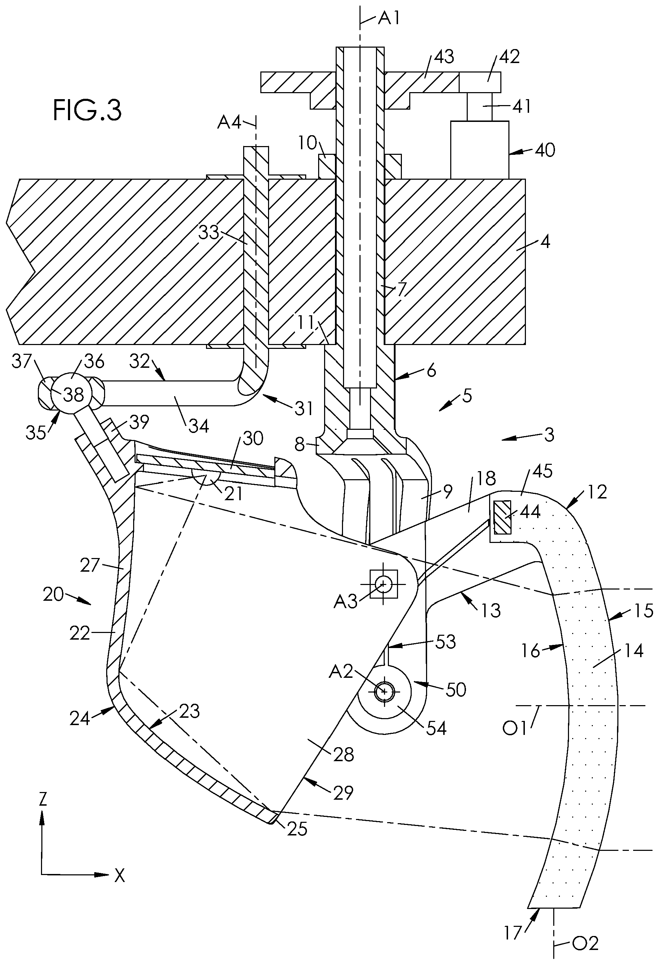

Selon un mode de réalisation illustré notamment sur la figure 3, la fixation de l'arbre **7** principal sur le châssis **4** est réalisée au moyen d'un écrou **10** vissé sur une partie supérieure de l'arbre **7**, le châssis **4 é**tant pris en sandwich entre l'écrou **10** et un épaulement **11** formé dans une partie inférieure de l'arbre **7**.

L'équipage **5** mobile comprend également une optique **12** comprenant une monture **13** et une lentille **14** solidaire de la monture **13**. La lentille **14** est réalisée dans un matériau transparent. Il s'agit de préférence d'une matière plastique synthétique, par exemple un polyacrylate, qui offre l'avantage d'offrir de bonnes propriétés optiques (notamment une bonne transparence) et mécaniques (notamment une bonne rigidité).

La lentille **14** présente un dioptre **15** avant (en l'espèce convexe) qui définit pour la lentille **14** un axe **O1** optique primaire, et un dioptre **16** arrière (en l'espèce concave) opposé. Le dioptre **15** avant et le dioptre **16** arrière sont reliés par une tranche **17** qui forme un dioptre latéral définissant un axe **O2** optique secondaire. Dans l'exemple illustré, le contour de la lentille **14** est sensiblement rectangulaire, mais cette forme est donnée à titre seulement illustratif.

Selon un mode de réalisation préféré, les dioptres **15**, **16** sont agencés de manière que l'axe **O1** optique primaire et l'axe **O2** optique secondaire soient perpendiculaires et s'étendent conjointement dans un plan vertical contenant également le premier axe **A1** de rotation de l'armature **6**.

La monture **13** est de préférence métallique ; elle comprend deux branches **18** latérales (qui, comme dans l'exemple illustré, peuvent être coudées), reliées par une barre **19** transversale dans laquelle est ancrée la lentille **14**.

Par ses branches **18**, la monture **13** est montée en rotation par rapport à l'armature **6** autour d'un deuxième axe **A2** horizontal. Ce deuxième axe **A2** de rotation est par exemple formé par des pivots (non représentés) reliant les branches **18** aux bras **9**, à une extrémité de ceux-ci. De même, le deuxième axe **A2** s'étend à une extrémité des branches **18** opposée à la barre **19** transversale.

L'équipage **5** mobile comprend, par ailleurs, un bloc **20** lumineux muni d'une source **21** lumineuse principale, monté en regard du dioptre **16** arrière de la lentille **14**. Ce bloc **20** lumineux comprend un réflecteur **22** définissant une face **23** interne concave réfléchissante en regard de laquelle la source 2**1** lumineuse principale est placée pour l'éclairer, et une face **24** externe convexe opposée, la face **23** interne et la face **24** externe étant reliées par une tranche **25**.

Le caractère réfléchissant de la face **23** interne est par exemple procuré par un revêtement **26** argenté.

La source **21** lumineuse principale est par exemple une ampoule à gaz (typiquement halogène ou au xénon), ou encore à diode(s) électroluminescente(s) ou LED.

Comme illustré sur les figures, et plus particulièrement sur la figure 3, le réflecteur **22** comprend une paroi **27** de fond et deux parois **28** latérales qui s'étendent verticalement, sensiblement parallèlement l'une à l'autre, de part et d'autre de la paroi **27** de fond. Les parois **28** latérales définissent conjointement, à l'opposé de la paroi **27** de fond, une ouverture **29** par laquelle passe la lumière émise par la source **21** lumineuse principale et réfléchie par la face **23** interne du réflecteur **22**.

Comme on le voit également sur la figure 3, le réflecteur **22** comprend une paroi **30** supérieure, éventuellement ajourée, sur laquelle la source **21** lumineuse principale est montée pour éclairer la face **23** interne du réflecteur **22**.

Le bloc **20** lumineux est monté en rotation, par rapport à la monture **13** de l'optique **12**, autour d'un troisième axe **A3** horizontal écarté du deuxième axe **A2**. Sur le réflecteur **22**, le troisième axe **A3** se trouve du côté de l'ouverture **29**. Sur la monture **13**, le troisième axe **A3** s'étend dans une zone intermédiaire entre l'extrémité des branches **18** et la barre **19** transversale, de préférence au niveau d'un coude formé par chaque branche **18**.

La rotation de l'armature **6** autour du premier axe **A1** vertical permet de faire pivoter l'optique **12** (et donc la lentille **14** et son axe **O1** optique primaire) par rapport au châssis **4** autour du premier axe **A1** vertical.

La rotation de la monture **13** autour du deuxième axe **A2** horizontal permet par ailleurs de faire pivoter l'optique **12** (et donc la lentille **14** et son axe **O1** optique primaire) par rapport au châssis **4** autour du deuxième axe **A2** horizontal.

Le dispositif **3** d'éclairage comprend un mécanisme **31** d'entraînement de la monture **13** en rotation, intégré à l'équipage **5** mobile et qui comprend des moyens de couplage de la rotation de l'armature **6** autour du premier axe **A1 à** la rotation de l'optique **12** autour du deuxième axe **A2** pour réaliser une synchronisation de ces deux rotations.

Comme nous allons le voir, ce couplage est ici réalisé par l'intermédiaire du bloc **20** lumineux.

Le mécanisme **31** d'entraînement comprend une bielle **32** munie d'un arbre **33** par lequel la bielle **32** est montée en rotation par rapport au châssis 4 autour d'un quatrième axe **A4** vertical écarté du premier axe **A1**, et d'un levier **34** coudé par rapport à l'arbre **33**, ce levier **34 é**tant accouplé au bloc **20** lumineux par une liaison **35** rotule (ci-après plus simplement dénommée rotule).

Selon un mode de réalisation illustré sur les figures, la rotule **35** comprend, d'une part, une sphère **36** portée par le bloc **20** lumineux, et d'autre part un oeilleton **37 à** siège **38** sphérique porté par le levier **34** de la bielle **32** et qui coopère avec la sphère **36**. Cette structure est donnée à titre d'exemple ; elle pourrait être inversée sans modification du fonctionnement.

Dans l'exemple illustré, la sphère **36** est montée sur une partie **39** du réflecteur **22** formée en saillie sur la face **24** externe de celui-ci.

Le levier **34** s'étend de préférence dans un plan horizontal, mais cette configuration n'est pas indispensable, l'essentiel étant que l'ancrage de la bielle **32** sur le bloc **20** lumineux soit excentré par rapport au premier axe **A1** de rotation vertical.

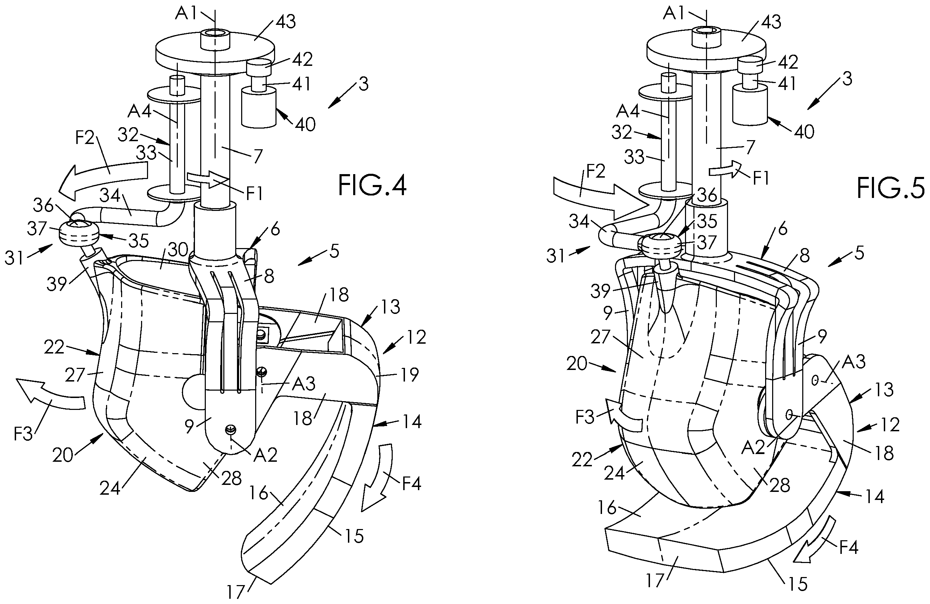

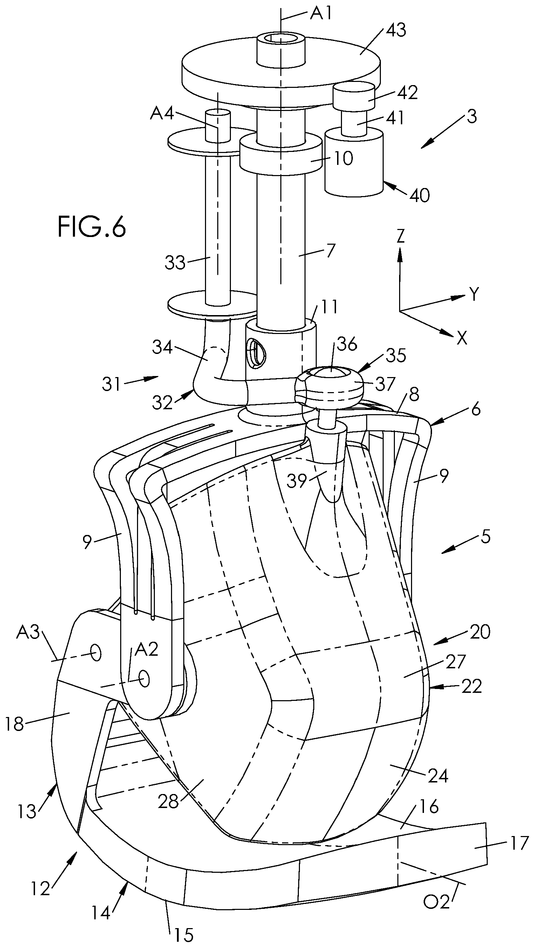

Pour accroître le débattement angulaire de l'ensemble, le levier **34** de la bielle **32** est de préférence courbé, comme cela est bien visible notamment sur les figures 5 et 6.

Le dispositif **3** comprend, en outre, une motorisation **40** couplée à l'armature **6** (ou à la bielle **32**) pour l'entraîner en rotation autour de son axe **A1** (respectivement **A4**) en fonction notamment de conditions de roulage prédéterminées, qui seront précisées ci-après. Selon un mode de réalisation préféré illustré sur les figures, la motorisation **40** est couplée à l'armature **6**. Dans l'exemple illustré, la motorisation **40** comprend un arbre **41** de sortie muni d'un pignon **42** qui engrène une roue **43** dentée solidaire de l'arbre **7** principal.

Dans une configuration dite de route, illustrée sur les figures 2, 3, 8B, 9B, 10 et 13, l'équipage **5** mobile est agencé pour procurer un éclairage de route suivant l'axe **O1** optique primaire.

Dans cette configuration :
- l'optique **12** (et donc la lentille **14**) adopte une orientation dite de route, dans laquelle le deuxième axe **A2** et le troisième axe **A3** s'étendent transversalement, parallèlement à Y, dans un même plan vertical (parallèle à YZ), et dans laquelle le dioptre **15** avant est tourné dans une direction dite avant (correspondant à une direction de déplacement du véhicule **1**), l'axe **O1** optique primaire s'étendant horizontalement, parallèlement à l'axe X tandis que l'axe **O2** optique secondaire s'étend sensiblement verticalement (parallèlement à l'axe Z) ;
- l'extrémité de la bielle **32** portant l'oeilleton **37** s'étend au plus loin de l'arbre **7** principal, c'est-à-dire du premier axe **A1** vertical,
- la face **23** interne du réflecteur **22** s'étend en regard du dioptre **16** arrière de la lentille **14**, de sorte à permettre un éclairage vers l'avant parallèlement à l'axe **O1** optique primaire, comme suggéré par les lignes en trait mixte sur la figure 3, qui matérialisent des rayons lumineux issus de la source **21** lumineuse principale et successivement réfléchis par la face **23** interne du réflecteur **22** et réfractés par la lentille **14** au passage du dioptre **16** arrière et du dioptre **15** avant.

Sous l'action de la motorisation **40**, l'arbre **7** principal est entraîné en rotation autour du premier axe **A1** vertical (flèche **F1**, figures 4 et 5). Cette rotation entraîne la rotation conjointe de l'optique **12** et du bloc **20** lumineux autour du premier axe **A1** vertical. La sphère **36** est cependant astreinte, par la rotule 35, à décrire une trajectoire circulaire dans un plan horizontal (balayée par l'extrémité du levier 34), centrée sur le quatrième axe **A4** vertical (flèche **F2**, figures 4 et 5) - et donc excentrée par rapport à l'axe **A1**. La rotation du bloc **20** lumineux autour du premier axe **A1** vertical provoque par conséquent le déplacement de la sphère **36** sur sa trajectoire circulaire, ce qui la rapproche du premier axe **A1** vertical et provoque le basculement propre du bloc **20** lumineux autour d'un axe horizontal passant par la sphère **36** et parallèle aux axes **A2** et **A3** (flèche **F3**, figures 4 et 5).

Il en résulte une poussée exercée par le bloc **20** lumineux sur le troisième axe **A3** horizontal, ce qui provoque le basculement de l'optique **12** autour du deuxième axe **A2** horizontal, autour duquel le troisième axe **A3** (et donc la monture **13**) est en effet astreint à se déplacer en décrivant une trajectoire circulaire.

Il résulte de cette cinématique deux rotations conjointes et synchrones de l'optique **12** par rapport au châssis **4**, d'une part autour du premier axe vertical **A1** et d'autre part autour du deuxième axe **A2** horizontal.

La rotation autour du premier axe **A1** vertical peut être effectuée, à partir de la configuration de route, sur une amplitude angulaire de 180°, ce qui place l'équipage **5** mobile dans une configuration dite de signalisation dans laquelle :
- l'armature **6** a effectué un demi-tour autour de son axe **A1** de rotation ;
- la bielle **32** a également effectué un demi-tour autour de son axe **A4** de rotation, ce qui amène l'oeilleton **37** au plus près de l'arbre **7** principal (et donc du premier axe **A1** vertical) ;
- l'optique **12** (et donc la lentille **14**) a effectué une rotation d'un demi-tour autour du premier axe **A1** vertical combinée à une rotation d'un quart de tour autour du deuxième axe **A2** horizontal, ce qui la place dans une orientation dite de signalisation dans laquelle la tranche **17** est tournée vers l'avant, l'axe **O2** optique secondaire étant horizontal et parallèle à l'axe X, tandis que l'axe **O1** optique primaire s'étend sensiblement verticalement (parallèlement à l'axe Z).

Cette architecture mobile procure les avantages suivants :
- simplicité, grâce à l'association des quatre axes **A1**, **A2**, **A3**, **A4** de rotation et de la rotule **35**,
- efficacité, les mouvements relatifs de l'armature **6**, du bloc **20** lumineux et de l'optique **12 é**tant précis,
- légèreté et compacité, grâce au faible nombre de pièces et à la présence d'une seule motorisation **40**.

En outre, cette architecture permet de réaliser plusieurs fonctions.

Une première fonction est une alternance entre un éclairage de route et un éclairage de signalisation.

Pour réaliser cette fonction, l'optique **12** est munie d'une source **44** lumineuse secondaire, apte à éclairer la tranche **17** de la lentille **14**.

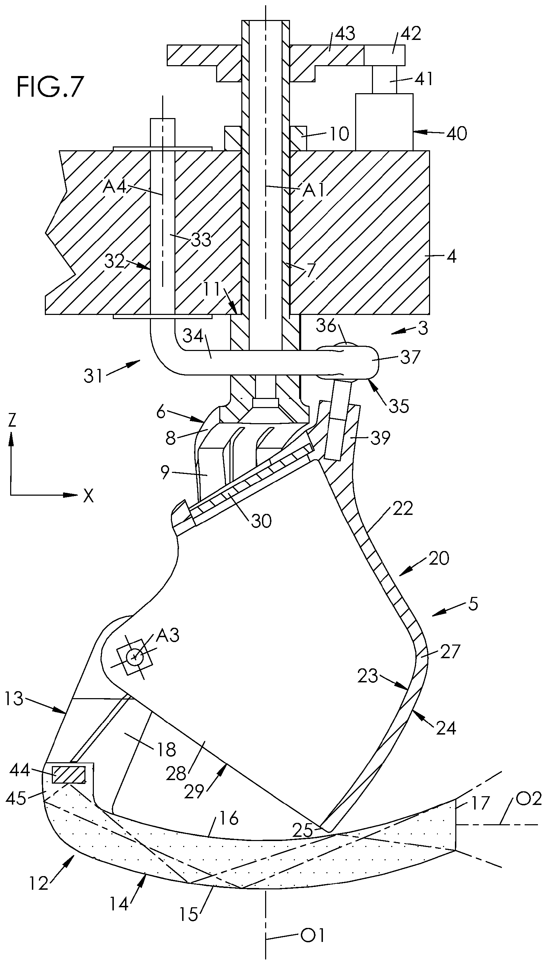

Selon un mode préféré de réalisation, la source **44** lumineuse secondaire est montée dans la lentille **14**. Plus précisément, et comme cela est visible en particulier sur les figures 5 et 7, la source **44** lumineuse secondaire est montée à distance de la tranche **17**, par exemple dans un bord **45** recourbé de la lentille **14** qui s'étend entre les branches **18**, les dioptres **15**, **16** formant un guide d'onde pour canaliser vers la tranche **17** le flux lumineux issu de la source **44** lumineuse secondaire, comme illustré sur la figure 7 où l'on a matérialisé en trait mixte certains rayons lumineux issus de la source **44** lumineuse secondaire, réfléchis en incidence rasante par le dioptre **15** avant et le dioptre **16** arrière de la lentille **14** et transmis sous forme de lumière diffuse par la tranche **17**.

Ainsi on obtient tantôt, dans la configuration de route, un éclairage directif, puissant, dirigé selon l'axe **O1** optique primaire de la lentille **14** et permettant d'éclairer la route devant le véhicule 1, tantôt, dans la configuration de signalisation, un éclairage diffus, relativement doux, par la tranche **17** de la lentille **14**, permettant de réaliser une lanterne signalant la position du véhicule **1** par exemple de jour ou pour créer, par exemple par association avec d'autres dispositifs **3** d'éclairage, une signature lumineuse. La commande de la rotation peut être effectuée de manière automatique au moyen d'un détecteur de luminosité relié, via un calculateur, à la motorisation **40**, et qui selon les conditions de luminosité ambiante place le dispositif **3** en configuration de signalisation lorsque la luminosité est importante (signalisation diurne), ou en configuration de route lorsque la luminosité est faible (éclairage nocturne ou de tunnel).

Une deuxième fonction est un balayage lumineux de l'environnement routier (route, bas-côtés, animaux, piétons, etc.) selon les conditions de roulage, et en particulier selon l'orientation du véhicule 1 (notamment selon le lacet, c'est-à-dire la rotation autour de l'axe Z, que le véhicule 1 effectue lors des changements de direction).

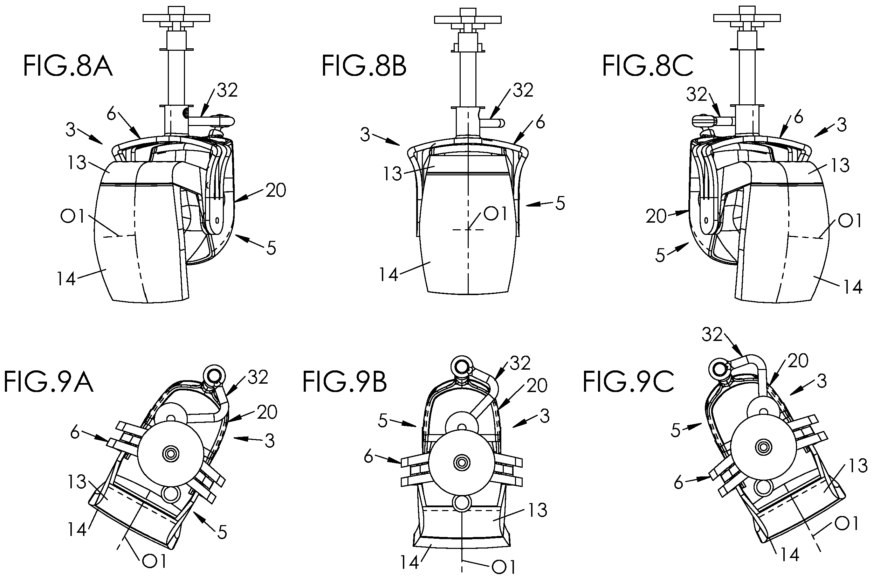

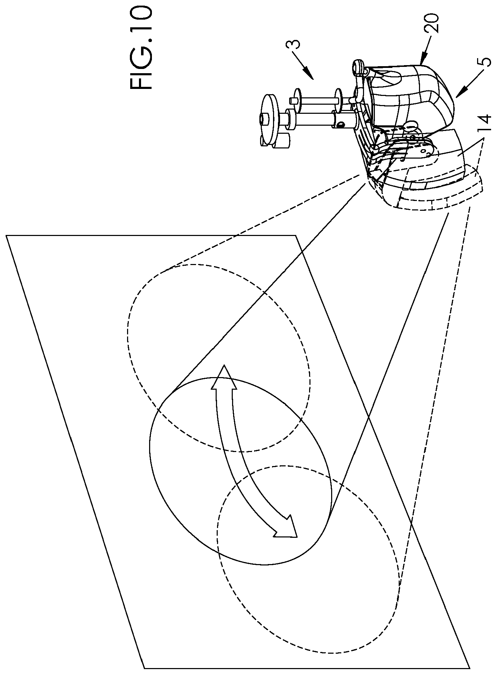

A cet effet, la motorisation **40** peut être asservie à l'orientation du véhicule **1** et entraîner l'équipage **5** mobile en rotation dans un sens ou dans l'autre autour du premier axe **A1**, pour éclairer des zones latérales de l'environnement routier. L'amplitude du mouvement peut être limitée (par exemple de quelques degrés), comme illustré sur les figures 8A, 8C, 9A, 9C ainsi que sur la figure 10 où l'on a représenté sur un plan fictif perpendiculaire à l'axe **O1** optique primaire dans l'orientation de route de l'optique **12** :
- en trait plein, l'équipage **5** mobile en configuration de route, et le faisceau produit par la lentille **14**, dirigé vers l'avant,
- en pointillés, la lentille **14** ayant subi une rotation limitée, et le faisceau produit par celle-ci, décalé latéralement dans un sens ou dans l'autre.

Dans l'exemple illustré l'amplitude angulaire du balayage est de l'ordre de ±20°, mais cette valeur n'est pas limitative.

Une troisième fonction est une fonction de signalisation procurée par le bloc **20** lumineux lui-même.

A cet effet, le réflecteur **22** est réalisé dans un matériau diffusant optiquement, c'est-à-dire apte à retransmettre sensiblement dans toutes les directions, de manière diffuse, un flux lumineux qu'il reçoit. On qualifie fréquemment ce type de matériau d'opalin, en référence à l'opale qui, éclairée, diffuse la lumière en procurant un effet laiteux.

On peut par exemple réaliser le réflecteur **22** dans une matière plastique transparente chargée d'un pigment (notamment un pigment blanc) qui rend la matière translucide et diffusante sans toutefois la rendre opaque.

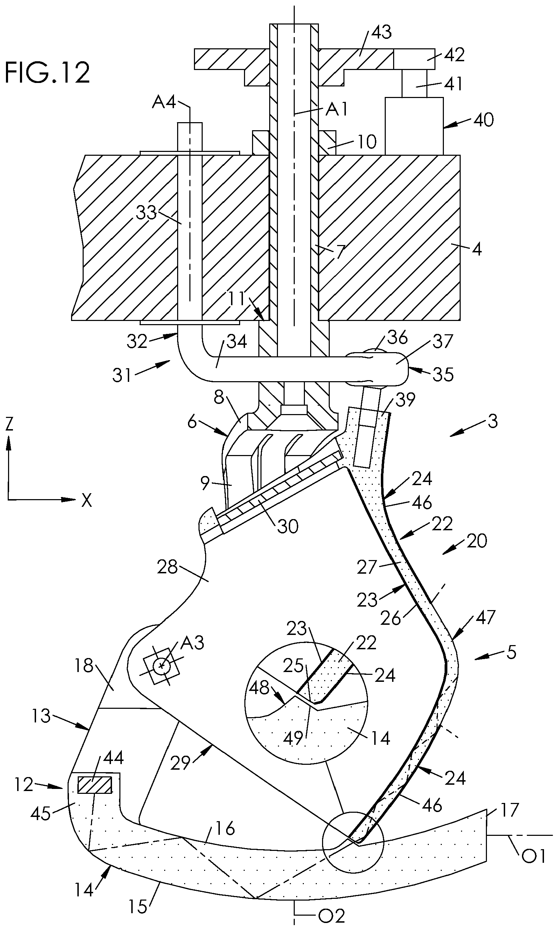

Comme illustré sur la figure 12, la face **24** externe est couverte d'un revêtement **46** opaque qui s'étend autour d'une zone **47** dite de diffusion non revêtue. Lorsque le réflecteur **22** est éclairé par la tranche **25** au moyen d'une source lumineuse, la lumière est transmise par la matière du réflecteur **22** en étant canalisée entre les revêtements **26**, **46** (matérialisés sur la figure 12 par des traits épais), puis diffusée par la zone **47** de diffusion.

L'éclairage procuré est de puissance faible ou moyenne ; il suffit néanmoins pour réaliser une fonction de signalisation révélant la position du véhicule **1**, et/ou une fonction esthétique selon les contours de la zone **47** de diffusion. Celle-ci peut ainsi être calquée sur un logo ou encore une inscription caractérisant par exemple une marque ou un slogan.

La réalisation de la zone **47** de diffusion peut être réalisée par masquage lors de l'application du revêtement **46** sur la face **24** externe du réflecteur **22**, au moyen d'un masque au contour de la zone **47** de diffusion, appliqué sur la face **24** externe, ou encore par enlèvement de matière (typiquement par gravure, notamment au laser) après application du revêtement **46**.

L'éclairage de la tranche **25** du réflecteur **22** peut être réalisé par une source lumineuse montée en permanence au droit de la tranche **25**. Cependant, suivant un mode préféré de réalisation, l'éclairage est procuré par la source **44** lumineuse secondaire portée par l'optique **12**, et la lentille **14** est munie d'un prisme **48** agencé pour transmettre au moins une partie du flux lumineux issu de la source **44** lumineuse secondaire. A cet effet, le prisme **48** est positionné sur la lentille **14** de manière à s'étendre au droit de la tranche **25** du réflecteur lorsque l'équipage **5** mobile est en configuration de signalisation, l'optique **12** étant dans son orientation de signalisation.

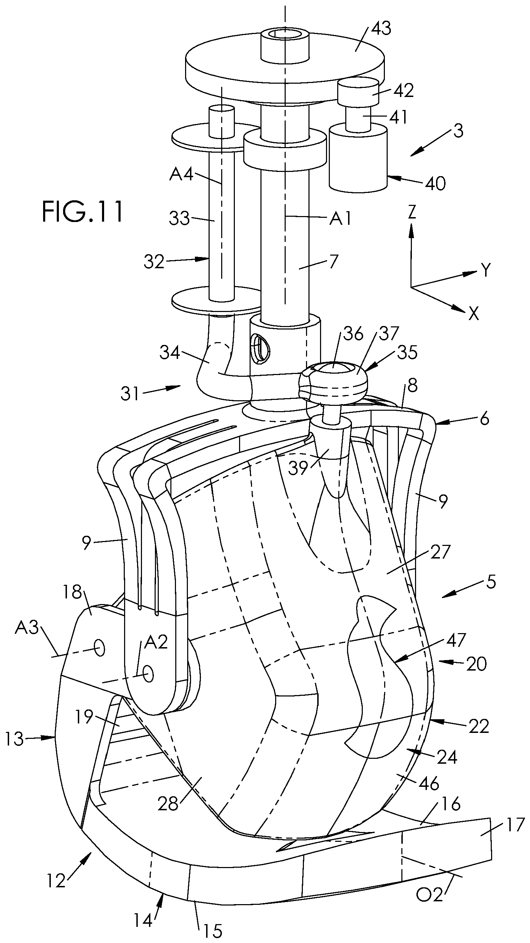

Comme on le voit bien sur les figures 11 et 12, le prisme **48** est formé dans la masse de la lentille **14**, en saillie sur le dioptre **16** arrière dans une zone qui, dans l'orientation de signalisation, s'étend au voisinage de la tranche **25** du réflecteur **22**.

Comme on le voit mieux encore sur le médaillon de détail de la figure 12, le prisme **48** est muni d'un dioptre **49** qui, en position de signalisation, s'étend sensiblement parallèlement à la tranche **25** du réflecteur **22** pour permettre une transmission efficace du flux lumineux de la lentille **14** au réflecteur **22**. Sur la figure 12, le trajet du flux lumineux est matérialisé par la ligne brisée en trait mixte, qui rend compte des réflexions successives subies par les rayons lumineux issus de la source **44** lumineuse secondaire, successivement sur les parois de la lentille **14** puis sur celles du réflecteur **22**.

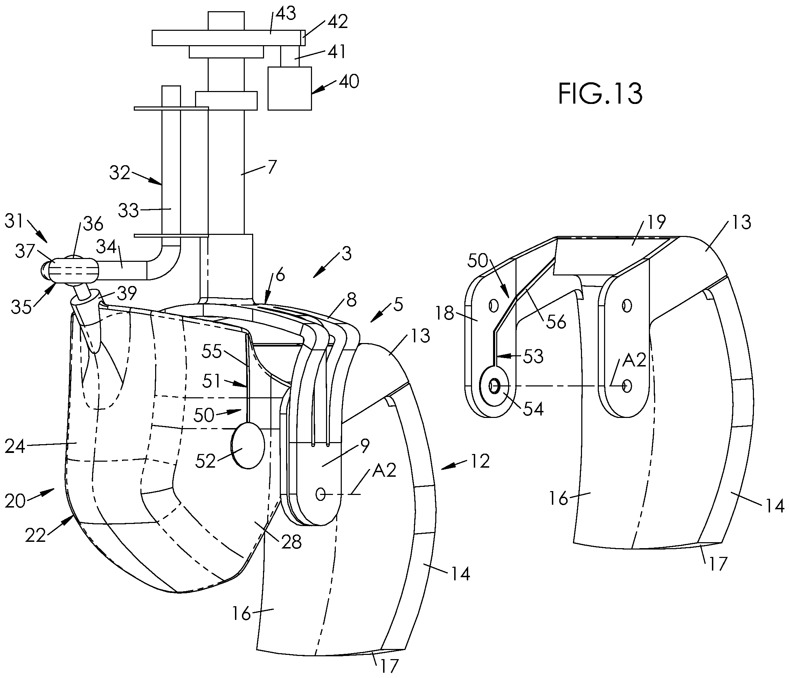

On a par ailleurs représenté sur les figures 13 à 16 des agencements permettant de réaliser l'alimentation électrique de la source **44** lumineuse secondaire mettant à profit la mobilité de l'optique 12.

A cet effet, le dispositif **3** d'éclairage comprend un circuit **50** électrique d'alimentation de la source **44** lumineuse secondaire, subdivisé en deux brins, à savoir :
- un premier brin **51** porté par le bloc **20** lumineux ou par l'armature **6**, et dont une extrémité définit une première borne **52** raccordée à une alimentation (non représentée sur les dessins), et
- un deuxième brin **53** porté par l'optique **12** et dont une extrémité définit une deuxième borne **54** raccordée à la source **44** lumineuse secondaire.

L'agencement du circuit **50** électrique est tel qu'en configuration de signalisation de l'équipage **5** mobile, la source **44** lumineuse secondaire est alimentée en courant, ce qui permet d'éclairer la tranche **17** de la lentille **14** et, lorsque celle-ci est pourvue d'un prisme **48**, la tranche **25** du réflecteur **22**, tandis qu'en configuration de route la source **44** lumineuse secondaire est privée de courant.

Plus précisément, les brins **51**, **53** du circuit **50 é**lectrique sont organisés de manière que la deuxième borne **54** soit :
- écartée de la première borne **52** dans la configuration de route (ce qui ouvre le circuit **50** électrique et coupe l'alimentation de la source **44** lumineuse secondaire),
- en contact avec la première borne **52** dans la configuration de signalisation (ce qui ferme le circuit **50** électrique et alimente la source **44** lumineuse secondaire).

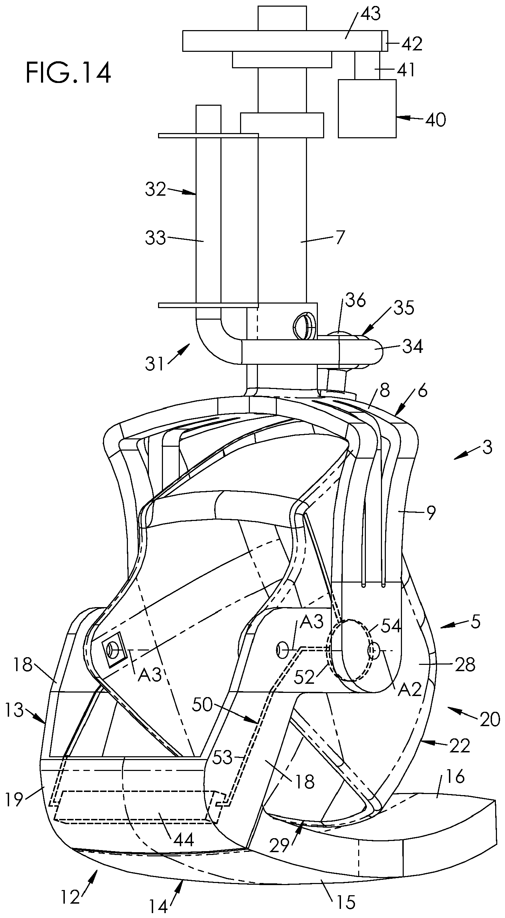

Selon un premier mode de réalisation, illustré sur les figures 13 et 14, le premier brin **51** est porté par le réflecteur **22**. Chacune des parois **28** latérale porte une première borne **52** (en l'espèce sous forme d'une pastille) raccordée à l'alimentation par un premier conducteur **55** (dont seule une partie est montrée sur les dessins), et l'optique **12** porte une paire de deuxièmes bornes **54**, chacune montée sur une branche **18**, sous forme d'une pastille entourant le deuxième axe **A2** horizontal de rotation et raccordée à la source **44** lumineuse secondaire par un deuxième conducteur **56** qui longe la branche **18**.

Comme on le voit sur la figure 14, chaque première borne **52** est placée sur une paroi **28** latérale du réflecteur **22** dans une position telle qu'en configuration de signalisation chaque deuxième borne **54** correspondante vient chevaucher la première borne **52** correspondante. On voit sur la figure 13 qu'en configuration de route, compte tenu de la mobilité de la lentille **14** par rapport au bloc **20** lumineux, chaque deuxième borne **54** est écartée de chaque première borne **52**.

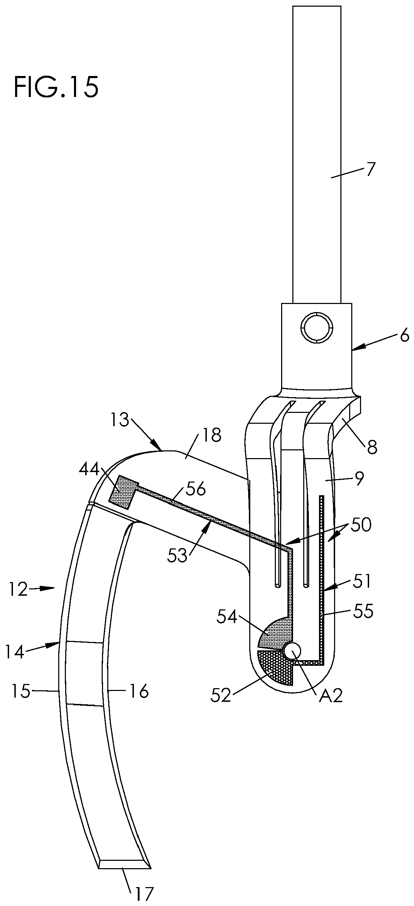

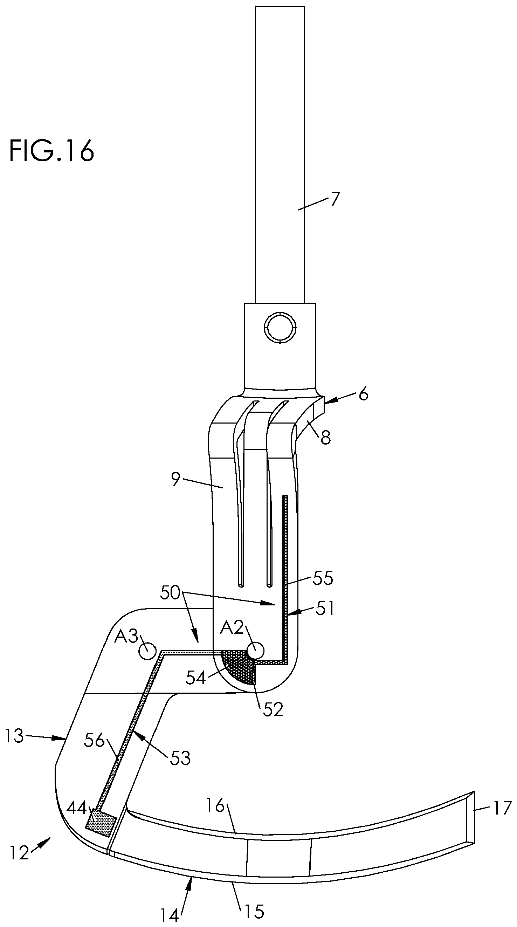

Selon un deuxième mode de réalisation illustré sur les figures 15 et 16, le premier brin **51** (en motif à nid d'abeille sur les figures **15**, et 16) est porté par l'étrier **6**. Plus précisément, chaque bras **9** porte une première borne **52**, sous forme d'un secteur angulaire centré sur le deuxième axe **A2** de rotation.

Chaque branche **18** de la monture **13** porte une deuxième borne **54** du deuxième brin **53** (en grisé sur les figures 15 et 16) sous forme d'un secteur angulaire également centré sur le deuxième axe **A2** de rotation, de manière que, dans la configuration de route (c'est-à-dire dans l'orientation de route de l'optique **12**), les bornes **52**, **54** soient écartées angulairement l'une de l'autre, ce qui ouvre le circuit **50** et coupe l'alimentation de la source **44** lumineuse secondaire (figure 13), tandis qu'en configuration de signalisation (c'est-à-dire dans l'orientation de signalisation de l'optique **12**), les bornes **52**, **54** soient en contact par chevauchement pour fermer le circuit **50 é**lectrique et ainsi alimenter la source **44** lumineuse secondaire.

Cette configuration du circuit **50** électrique permet de réaliser une bascule automatique (bien que mécanique) entre l'extinction la source **44** lumineuse secondaire en configuration de route (pour privilégier l'allumage de la source **21** lumineuse principale) et son allumage en configuration de signalisation, de sorte à éclairer la tranche **17** de la lentille **14** et/ou la zone **47** de diffusion du réflecteur **22**. On voit donc que l'allumage et l'extinction de la source **44** lumineuse secondaire sont accouplés, de manière simple et efficace, à l'orientation de l'optique **12**.

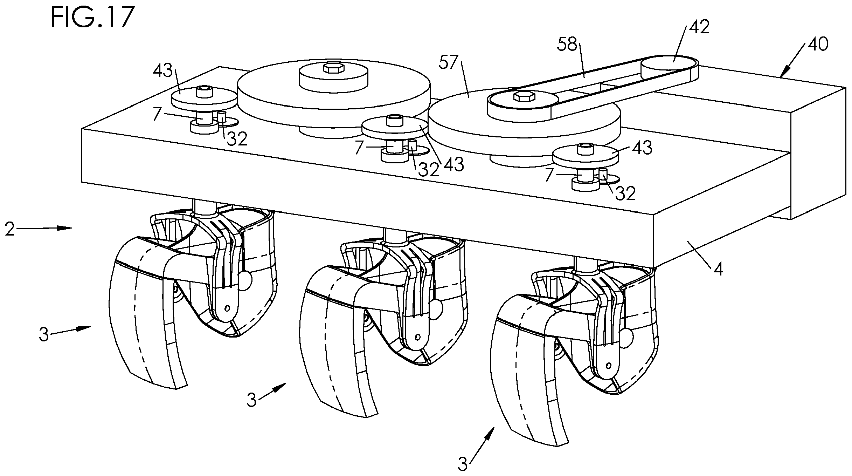

Le dispositif **3** d'éclairage qui vient d'être décrit peut être monté seul au sein d'un bloc **2** de phare. Cependant, comme on l'a représenté sur la figure 17, un même bloc **2** de phare peut intégrer plusieurs dispositifs **3** d'éclairage de ce type, dont les armatures **6** (ou les bielles **32**) sont par exemple couplées en rotation. Il en résulte une synchronisation des dispositifs **3** d'éclairage, qui adoptent conjointement leurs configurations de route ou de signalisation. Le couplage peut être réalisé par une transmission mécanique, par exemple à engrenages (comme illustré), ou encore à chaîne ou courroie. Une seule motorisation **40** suffit à l'entraînement de l'ensemble. Dans l'exemple illustré, la motorisation **40** est couplée à une roue **57** d'entraînement au moyen d'une courroie **58**.

De même, dans l'exemple de la figure 17, les arbres principaux **7** des différents dispositifs **3** d'éclairage sont parallèles. Un tel parallélisme n'est cependant pas obligatoire, et les arbres **7** principaux pourraient être inclinés les uns par rapport aux autres, par exemple pour permettre, en position de signalisation, de réaliser un motif par aboutement des tranches **17** des différentes lentilles le long d'une ligne prédéterminée.

## Revendications

1. Dispositif (**3**) d'éclairage pour véhicule (**1**) automobile, qui comprend :
- un châssis (**4**) ;
- une optique (**12**) comprenant une monture (**13**) et une lentille (**14**) solidaire de la monture (**13**), la lentille (**14**) ayant un dioptre (**15**) avant et un dioptre (**16**) arrière opposés reliés par une tranche (**17**), la monture (**13**) étant montée en rotation par rapport au châssis (4) ;
- un bloc (**20**) lumineux muni d'une source (**21**) lumineuse principale ;
- un mécanisme (**31**) d'entraînement de l'optique (**12**) en rotation, propre à placer l'optique (**12**) selon une orientation dite de route dans laquelle le dioptre (**15**) avant est tourné vers une direction dite avant ;
ce dispositif (**3**) étant **caractérisé en ce que** :
- l'optique (**12**) est munie d'une source (**44**) lumineuse secondaire, apte à éclairer la tranche (**17**) de la lentille (**14**),
- le mécanisme (**31**) d'entraînement est agencé pour placer l'optique (**12**) selon une orientation dite de signalisation dans laquelle la tranche (**17**) est tournée vers l'avant.

2. Dispositif (**3**) selon la revendication 1, **caractérisé en ce que** la source (**44**) lumineuse secondaire est montée dans la lentille (**14**).

3. Dispositif (**3**) selon la revendication 2, **caractérisé en ce que** la source (**44**) lumineuse secondaire est montée à distance de la tranche (**17**), les dioptres (**15**, **16**) formant un guide d'onde pour canaliser vers la tranche (**17**) le flux lumineux issu de la source (**44**) lumineuse secondaire.

4. Dispositif (**3**) selon l'une des revendications précédentes, **caractérisé en ce que** le bloc (**20**) lumineux comprend un réflecteur (**22**) définissant une face (**23**) interne concave réfléchissante en regard de laquelle la source (**21**) lumineuse principale est placée.

5. Dispositif (**3**) selon la revendication 4, **caractérisé en ce que**, dans l'orientation de route, le dioptre (**16**) arrière de la lentille (**14**) est placé en regard de la face (**23**) interne du bloc (**20**) lumineux.

6. Dispositif (**3**) selon l'une des revendications précédentes, **caractérisé en ce que** l'orientation de signalisation est décalée angulairement, par rapport à l'orientation de route, d'un angle de **180°** environ.

7. Dispositif (**3**) selon l'une des revendications précédentes, **caractérisé en ce que** :
- le dispositif (**3**) comprend une armature (**6**) montée en rotation par rapport au châssis (**4**) autour d'un premier axe (**A1**) vertical ;
- l'optique (**12**) est montée en rotation par rapport à l'armature (**6**) autour d'un deuxième axe (**A2**) horizontal ;
- l'optique (**12**) est montée en rotation par rapport au bloc (**20**) lumineux autour d'un troisième axe (**A3**) horizontal écarté du deuxième axe (**A2**) horizontal ;
- le mécanisme (**31**) d'entraînement comprend une bielle (**32**) munie d'un arbre (**33**) par lequel la bielle (**32**) est montée en rotation par rapport au châssis (**4**) autour d'un quatrième axe (**A4**) vertical écarté du premier axe (**A1**) vertical, et d'un levier (34) coudé par rapport à l'arbre (**33**), le levier (**34**) de la bielle (**32**) étant accouplé au bloc (**20**) lumineux par une liaison rotule (**35**).

8. Dispositif (**3**) selon l'une des revendications précédentes, **caractérisé en ce qu'**il comprend en outre une motorisation (**40**) couplée au mécanisme (**31**) d'entraînement.

9. Bloc (**2**) de phare pour véhicule automobile, qui intègre un dispositif (**3**) d'éclairage selon l'une des revendications précédentes.

10. Véhicule (**1**) automobile équipé d'un bloc (**2**) de phare selon la revendication 9.

## Patentansprüche

1. Beleuchtungsvorrichtung (3) für Kraftfahrzeug (1), umfassend:
- einen Rahmen (4);
- eine Optik (12), umfassend eine Halterung (13) und eine Linse (14), die fest mit der Halterung (13) verbunden ist, wobei die Linse (14) ein vorderes Diopter (15) und ein entgegengesetztes hinteres Diopter (16) besitzt, die durch einen Abschnitt (17) verbunden sind, wobei die Halterung (13) in Bezug auf den Rahmen (4) drehbar montiert ist;
- einen Lichtblock (20), der mit einer Hauptlichtquelle (21) ausgestattet ist;
- einen Antriebsmechanismus (31) der drehbaren Optik (12), der geeignet ist, die Optik (12) gemäß einer so genannten Straßenausrichtung zu positionieren, in der das vordere Diopter (15) zu einer so genannten vorderen Richtung hin gedreht ist;
wobei diese Vorrichtung (3) **dadurch gekennzeichnet ist, dass**:
- die Optik (12) mit einer zweiten Lichtquelle (44) ausgestattet ist, die in der Lage ist, den Abschnitt (17) der Linse (14) zu beleuchten;
- der Antriebsmechanismus (31) dafür eingerichtet ist, die Optik (12) gemäß einer so genannten Signalgebungsausrichtung zu positionieren, in der der Abschnitt (17) nach vorne gedreht ist.

2. Vorrichtung (3) gemäß Anspruch 1, **dadurch gekennzeichnet, dass** die zweite Lichtquelle (44) in der Linse (14) montiert ist.

3. Vorrichtung (3) gemäß Anspruch 2, **dadurch gekennzeichnet, dass** die zweite Lichtquelle (44) in Abstand zu dem Abschnitt (17) montiert ist, wobei die Diopter (15, 16) einen Wellenleiter bilden zum Kanalisieren des aus der zweiten Lichtquelle (44) stammenden Lichtstroms zu dem Abschnitt (17) hin.

4. Vorrichtung (3) gemäß einem der vorhergehenden Ansprüche, **dadurch gekennzeichnet, dass** der Lichtblock (20) einen Reflektor (22) umfasst, der eine reflektierende konkave Innenfläche (23) definiert, der gegenüber die Lichtquelle (21) positioniert ist.

5. Vorrichtung (3) gemäß Anspruch 4, **dadurch gekennzeichnet, dass** in der Straßenausrichtung das hintere Diopter (16) der Linse (14) der Innenfläche (23) des Lichtblocks (20) gegenüber positioniert ist.

6. Vorrichtung (3) gemäß einem der vorhergehenden Ansprüche, **dadurch gekennzeichnet, dass** die Signalgebungsausrichtung in Bezug auf die Straßenausrichtung winkelmäßig um einen Winkel von ungefähr 180° versetzt ist.

7. Vorrichtung (3) gemäß einem der vorhergehenden Ansprüche, **dadurch gekennzeichnet, dass**:
- die Vorrichtung (3) eine Armatur (6) umfasst, die in Bezug auf den Rahmen (4) um eine erste vertikale Achse (A1) drehbar montiert ist;
- die Optik (12) in Bezug auf die Armatur (6) um eine zweite horizontale Achse (A2) drehbar montiert ist;
- die Optik (12) in Bezug auf den Lichtblock (20) um eine dritte horizontale Achse (A3) drehbar montiert ist, die von der zweiten horizontalen Achse (A2) beabstandet ist;
- der Antriebsmechanismus (31) ein Pleuel (32) umfasst, das mit einer Welle (33) ausgestattet ist, durch die das Pleuel (32) in Bezug auf den Rahmen (4) um eine vierte vertikale Achse (A4) drehbar montiert ist, die von der ersten vertikalen Achse (A1) beabstandet ist, und einen Hebel (34), der in Bezug auf die Welle (33) abgewinkelt ist, wobei der Hebel (34) des Pleuels (32) durch eine Gelenkverbindung (35) an den Lichtblock (20) angekoppelt ist.

8. Vorrichtung (3) gemäß einem der vorhergehenden Ansprüche, **dadurch gekennzeichnet, dass** sie weiter eine Motorisierung (40) umfasst, die mit dem Antriebsmechanismus (31) gekoppelt ist.

9. Scheinwerferblock (2) für Kraftfahrzeug, das eine Beleuchtungsvorrichtung (3) gemäß einem der vorhergehenden Ansprüche integriert.

10. Kraftfahrzeug (1), das mit einem Scheinwerferblock (2) gemäß Anspruch 9 ausgerüstet ist.

## Claims

1. Lighting device (3) for a motor vehicle (1), which comprises:
- a framework (4);
- an optical unit (12) comprising a mount (13) and a lens (14) secured to the mount (13), the lens (14) having a front refracting surface (15) and a rear refracting surface (16) opposite each other and connected by an edge (17), the mount (13) being mounted for rotation with respect to the framework (4);
- a light unit (20) provided with a main light source (21);
- a mechanism (31) for rotating the optical unit (12), able to place the optical unit (12) in a so-called main-beam orientation in which the front refracting surface (15) is turned towards a so-called front direction;
this device (3) being **characterised in that**:
- the optical unit (12) is provided with a secondary light source (44), able to illuminate the edge (17) of the lens (14),
- the drive mechanism (31) is arranged so as to place the optical unit (12) in a so-called signalling orientation in which the edge (17) is turned towards the front.

2. Device (3) according to claim 1, **characterised in that** the secondary light source (44) is mounted in the lens (14).

3. Device (3) according to claim 2, **characterised in that** the secondary light source (44) is mounted at a distance from the edge (17), the refracting surfaces (15, 16) forming a light guide for channelling towards the edge (17) the light flow issuing from the secondary light source (44).

4. Device (3) according to any of the preceding claims, **characterised in that** the light unit (20) comprises a reflector (22) defining a reflective concave internal face (23) facing which the main light source (21) is placed.

5. Device (3) according to claim 4, **characterised in that**, in the main-beam orientation, the rear refracting surface (16) of the lens (14) is placed facing the internal face (23) of the light unit (20).

6. Device (3) according to any of the preceding claims, **characterised in that** the signalling orientation is offset angularly, with respect to the main-beam orientation, by an angle of approximately 180°.

7. Device (3) according to any of the preceding claims, **characterised in that**:
- the device (3) comprises a frame (6) mounted for rotation with respect to the framework (4) about a first vertical axis (A1);
- the optical unit (12) is mounted for rotation with respect to the frame (6) about a second horizontal axis (A2);
- the optical unit (12) is mounted for rotation with respect to the light unit (20) about a third horizontal axis (A3) distant from the second horizontal axis (A2);
- the drive mechanism (31) comprises a linkage (32) provided with a shaft (33) by means of which the linkage (32) is mounted for rotation with respect to the framework (4) about a fourth vertical axis (A4) distant from the first vertical axis (A1), and a lever (34) angled with respect to the shaft (33), the lever (34) of the linkage (32) being coupled to the light unit (20) by a swivel connection (35).

8. Device (3) according to any of the preceding claims, **characterised in that** it further comprises a drive unit (40) coupled to the drive mechanism (31).

9. Headlamp unit (2) for a motor vehicle, which includes a lighting device (3) according to any of the preceding claims.

10. Motor vehicle (1) equipped with headlamp unit (2) according to claim 9.
